# EUROPEAN PATENT SPECIFICATION

(11) **EP 4 083 557 B1**
(45) Date of publication and mention of the grant of the patent: **13.12.2023**
(21) Application number: 19957371.8
(22) Date of filing: 25.12.2019
(51) Int. Cl.: F28D 1/053, F28F 1/12, F28F 1/14, F28F 1/32, F28F 13/12

(54) **HEAT EXCHANGER UNIT AND REFRIGERATION CYCLE DEVICE**
WÄRMETAUSCHEREINHEIT UND KÄLTEKREISLAUFVORRICHTUNG
UNITÉ D'ÉCHANGE DE CHALEUR ET DISPOSITIF À CYCLE FRIGORIFIQUE

(43) Date of publication of application: 02.11.2022
(73) Proprietor: MITSUBISHI ELECTRIC CORPORATION, Chiyoda-ku Tokyo 100-8310 (JP)
(72) Inventor: MAEDA, Tsuyoshi, Tokyo 1008310 (JP); YATSUYANAGI, Akira, Tokyo 1008310 (JP); ISHIBASHI, Akira, Tokyo 1008310 (JP)
(74) Representative: Pfenning, Meinig & Partner mbB
(86) International application number: PCT/JP2019/050872
(87) International publication number: WO 2021/130910

(56) References cited:
- EP-A1- 3 524 917
- WO-A1-2018/066067
- WO-A1-2018/066075
- WO-A1-2019/167840
- JP-A- 2011 158 250
- JP-U- S53 162 945
- JP-U- S53 162 945
- JP-U- S54 139 356
- US-A1- 2013 206 376
- US-A1- 2013 206 376

## Description

### Technical Field

The present disclosure relates to a heat-exchanger unit comprising a vortex generator and a refrigeration cycle apparatus including the heat-exchanger.

### Background Art

Some disclosed refrigeration cycle apparatus includes a vortex generator located upstream of a heat exchanger to compensate for insufficiency in the heat transfer area of the heat exchanger. The vortex generator generates vortex flows from air flowing into the heat exchangers (see Patent Literatures 1 and 2, for example).

A refrigeration cycle apparatus disclosed in Patent Literature 1 includes a vortex generator configured to change the flow of air traveling into a heat exchanger from laminar flows to vortex flows (turbulent flows). Vortex flows of air produce great effects of heat transport and diffusion and therefore improve the heat transfer performance of the heat exchanger more than laminar flows of air. Accordingly, the capacity of heat exchange of the heat exchanger is increased by the effect of vortices.

Document EP 3 524 917 A1 discloses heat-exchanger unit according to the preamble of claim 1 and describes a refrigeration cycle apparatus comprising: an evaporator including heat transfer tubes through which refrigerant flows, and heat transfer fins connected to the heat transfer tubes, the evaporator being configured to cool air with the refrigerant; a fan configured to supply the air to the evaporator; and a vortex generator formed independently of the evaporator, and provided upstream of the evaporator in a flow direction of the air.

Document US 2013/206376 A1 discloses a heat exchanger that uses a first heat exchange medium flowing through a plurality of heat-exchanger tubes and a second heat exchange medium flowing between the plurality of heat-exchanger tubes in a direction orthogonal to the flow of the first heat exchange medium.

Document JP S53 162945 U discloses a fin tube constituting a heat exchanger.

### Citation List

### Patent Literature

Patent Literature 1: International Publication No. 2018/066066
Patent Literature 2: International Publication No. 2018/066067

### Summary of Invention

### Technical Problem

The heat exchangers disclosed in Patent Literatures 1 and 2 have a problem in that the capacity of heat exchange is not satisfactorily increased because the vortex flows are attenuated while the vortex flows pass through spaces between heat transfer parts such as flat tubes.

The present disclosure is to solve the above problem and to provide a heat-exchanger unit and a refrigeration cycle apparatus each configured to reduce attenuation of vortex flows of air that occurs when the air passes through spaces between heat transfer parts of a heat exchanger.

### Solution to Problem

The invention is set out in the appended set of claims.

### Advantageous Effects of Invention

According to an embodiment of the present disclosure, since the plurality of heat transfer parts of the heat exchanger are each provided with the fin portion, the heat exchanger has an increased area of heat transfer. Furthermore, air passages provided between adjacent ones of the heat transfer parts all have a uniform shape. Therefore, even when the air passages are long, the flow of the air is stabilized. Consequently, attenuation of the vortex flow traveling into the heat exchanger is reduced. Furthermore, since the fin portions of the heat exchanger extend toward the vortex generator, wide inlets are provided for the air flowing toward the heat exchanger. Such a configuration reduces the attenuation of the vortex flow that occurs when the flow of the air collides with the heat exchanger.

### Brief Description of Drawings

[Fig. 1] Fig. 1 is a refrigerant circuit diagram that illustrates a configuration of a refrigeration cycle apparatus 100 including a heat exchanger 50 according to Embodiment 1.
[Fig. 2] Fig. 2 is a schematic perspective view that illustrates a configuration of the heat exchanger 50 according to Embodiment 1.
[Fig. 3] Fig. 3 is a conceptual side view of the heat exchanger 50 according to Embodiment 1.
[Fig. 4] Fig. 4 is a sectional view of one of heat transfer parts 10 illustrated in Fig. 3.
[Fig. 5] Fig. 5 is a side view of the heat exchanger 50 and a vortex generator 80 included in the refrigeration cycle apparatus 100 according to Embodiment 1, illustrating the positional relationship between the two.
[Fig. 6] Fig. 6 is a schematic diagram of the heat exchanger 50 and the vortex generator 80 illustrated in Fig. 5, illustrating their sections perpendicular to y direction.
[Fig. 7] Fig. 7 is a sectional view of a heat transfer part 10a that is a modification of the heat transfer part 10 according to Embodiment 1.
[Fig. 8] Fig. 8 is a sectional view of a heat transfer part 10b that is a modification of the heat transfer part 10 according to Embodiment 1.
[Fig. 9] Fig. 9 is a sectional view of a heat transfer part 10c that is a modification of the heat transfer part 10 according to Embodiment 1.
[Fig. 10] Fig. 10 discloses Embodiment 2 and the invention with a schematic diagram of a heat exchanger 250 and the vortex generator 80 included in a refrigeration cycle apparatus 200, illustrating the positional relationship between the two.
[Fig. 11] Fig. 11 is a schematic diagram of a heat exchanger 350 and the vortex generator 80 included in a refrigeration cycle apparatus 300 according to Embodiment 3, illustrating the positional relationship between the two.
[Fig. 12] Fig. 12 is an enlargement of a heat transfer part 310 provided in a second heat-exchanger section 352 included in the heat exchanger 350 according to Embodiment 3.
[Fig. 13] Fig. 13 is a schematic sectional view of one of fin portions 330 illustrated in Fig. 12, taken along line B-B.
[Fig. 14] Fig. 14 is a schematic sectional view of one of the fin portions 330 illustrated in Fig. 12, taken along line C-C.
[Fig. 15] Fig. 15 is an enlargement of one of the fin portions 330 included in the heat transfer part 310 illustrated in Fig. 12.
[Fig. 16] Fig. 16 is a schematic sectional view that illustrates a configuration of the fin portions 330 illustrated in Fig. 15, taken along line D-D.
[Fig. 17] Fig. 17 is a schematic sectional view that illustrates the configuration of the fin portions 330 illustrated in Figs. 15 and 16, taken along line E-E.

### Description of Embodiments

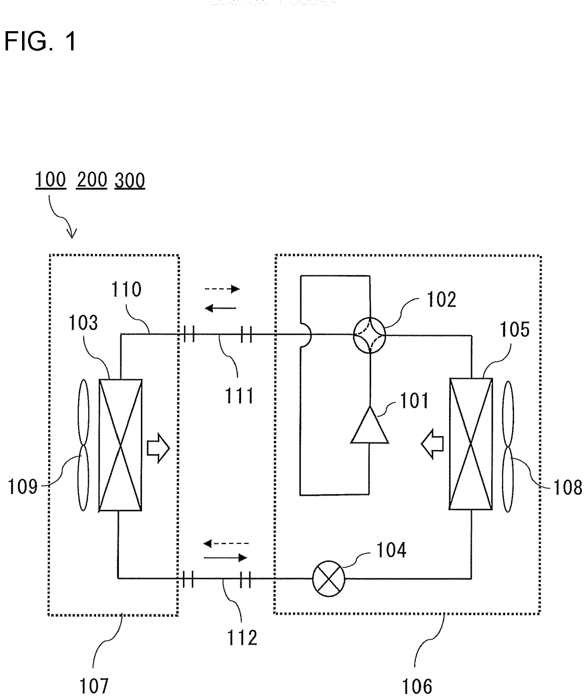

A heat exchanger, a heat-exchanger unit, a refrigeration cycle apparatus, and a method of manufacturing a heat exchanger part according to Embodiment 1 will be described below with reference to the drawings and relevant materials. In the drawings, including Fig. 1, to be referred to below, factors such as relative sizes and shapes of individual elements may be different from those of actual elements. In the drawings to be referred to below, the same reference signs denote the same or equivalent elements, which applies throughout this specification. For easy understanding, terms indicating directions (such as "upper", "lower", "right", "left", "front", and "rear") will be used accordingly. Such terms, however, are only for convenience of description and do not limit the arrangements or orientations of the apparatus and elements. In this specification, the positional relationship between elements, directions in which elements extend, and directions in which elements are arranged are those in a state where the heat exchanger is usably installed.

### Embodiment 1

### (Refrigeration Cycle Apparatus 100)

Fig. 1 is a refrigerant circuit diagram that illustrates a configuration of a refrigeration cycle apparatus 100 including a heat exchanger 50 according to Embodiment 1. In Fig. 1, dotted-line arrows represent a direction in which refrigerant in a refrigerant circuit 110 flows in a cooling operation, and solid-line arrows represent a direction in which the refrigerant flows in a heating operation. First, with reference to Fig. 1, the refrigeration cycle apparatus 100 including the heat exchanger 50 will be described. Embodiment 1 relates to a case where the refrigeration cycle apparatus 100 serves as an air-conditioning apparatus. The refrigeration cycle apparatus 100 is also applicable to apparatuses intended for refrigeration uses or air-conditioning uses: such as a refrigerator, a freezer, a vending machine, an air-conditioning apparatus, a freezing apparatus, and a water heater. The refrigerant circuit 110 illustrated in Fig. 1 is only exemplary. The configuration and other relevant factors of circuit elements are not limited to those to be described in the following embodiments and may be properly changed within the technical scope of the embodiments.

The refrigeration cycle apparatus 100 includes a compressor 101, a flow switching device 102, an indoor heat exchanger 103, a decompressor 104, and an outdoor heat exchanger 105, which are all connected to one another by refrigerant pipes to form a loop serving as the refrigerant circuit 110. At least one of the outdoor heat exchanger 105 and the indoor heat exchanger 103 is provided with the heat exchanger 50 to be described below. The refrigeration cycle apparatus 100 includes an outdoor unit 106 and an indoor unit 107. A device, such as the outdoor unit 106 and the indoor unit 107, having a heat exchanger inside the device may be referred to as a heat-exchanger unit. The outdoor unit 106 houses the compressor 101, the flow switching device 102, the outdoor heat exchanger 105, the decompressor 104, and an outdoor fan 108. The outdoor fan 108 supplies outdoor air to the outdoor heat exchanger 105. The indoor unit 107 houses the indoor heat exchanger 103 and an indoor fan 109. The indoor fan 109 supplies air to the indoor heat exchanger 103. The outdoor unit 106 and the indoor unit 107 are connected to each other by an extension pipe 111 and an extension pipe 112, which are two of the refrigerant pipes.

The compressor 101 is a fluid machine that compresses sucked refrigerant and discharges the compressed refrigerant. The flow switching device 102 is, for example, a four-way valve and is configured to switch refrigerant flows between one for the cooling operation and one for the heating operation under the control of a controller (not illustrated).

The indoor heat exchanger 103 causes the refrigerant flowing through its inside and the indoor air supplied by the indoor fan 109 to exchange heat with each other. The indoor heat exchanger 103 serves as a condenser in the heating operation and as an evaporator in the cooling operation.

The decompressor 104 is, for example, an expansion valve and decompresses the refrigerant. The decompressor 104 may be an electrical expansion valve whose opening degree is regulated under the control of the controller.

The outdoor heat exchanger 105 causes the refrigerant flowing through its inside and the air supplied by the outdoor fan 108 to exchange heat with each other. The outdoor heat exchanger 105 serves as an evaporator in the heating operation and as a condenser in the cooling operation.

### (Operation of Refrigeration Cycle Apparatus 100)

An exemplary operation of the refrigeration cycle apparatus 100 will be described below with reference to Fig. 1. In the heating operation of the refrigeration cycle apparatus 100, the refrigerant is discharged from the compressor 101 in the form of gas having a high pressure and a high temperature and flows through the flow switching device 102 into the indoor heat exchanger 103, where the refrigerant exchanges heat with the air supplied by the indoor fan 109 and is thus condensed. The condensed refrigerant takes the form of liquid having a high pressure and flows out from the indoor heat exchanger 103. Then, the refrigerant is decompressed by the decompressor 104 into two-phase gas-liquid refrigerant having a low pressure. The two-phase gas-liquid refrigerant having a low pressure flows into the outdoor heat exchanger 105, where the refrigerant exchanges heat with the air supplied by the outdoor fan 108 and is thus evaporated. The evaporated refrigerant takes the form of gas having a low pressure and is sucked into the compressor 101.

In the cooling operation of the refrigeration cycle apparatus 100, the refrigerant flows through the refrigerant circuit 110 in a direction opposite to the direction in the heating operation. Specifically, in the cooling operation of the refrigeration cycle apparatus 100, the refrigerant is discharged from the compressor 101 in the form of gas having a high pressure and a high temperature and flows through the flow switching device 102 into the outdoor heat exchanger 105, where the refrigerant exchanges heat with the air supplied by the outdoor fan 108 and is thus condensed. The condensed refrigerant takes the form of liquid having a high pressure and flows out from the outdoor heat exchanger 105. Then, the refrigerant is decompressed by the decompressor 104 into two-phase gas-liquid refrigerant having a low pressure. The two-phase gas-liquid refrigerant having a low pressure flows into the indoor heat exchanger 103, where the refrigerant exchanges heat with the air supplied by the indoor fan 109 and is thus evaporated. The evaporated refrigerant takes the form of gas having a low pressure and is sucked into the compressor 101.

### (Heat Exchanger 50)

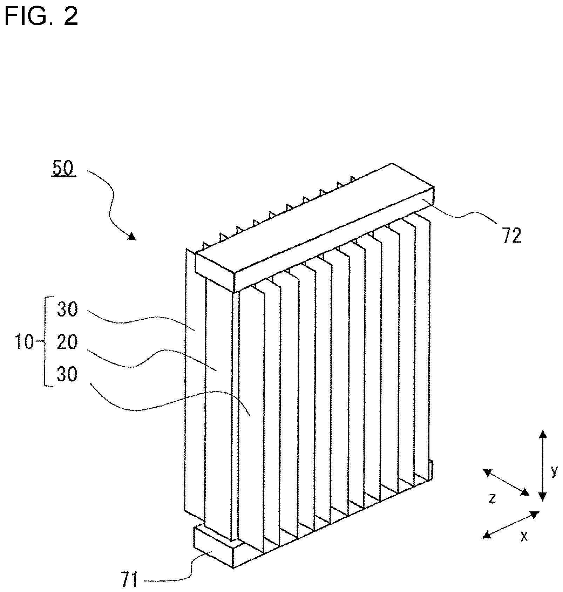

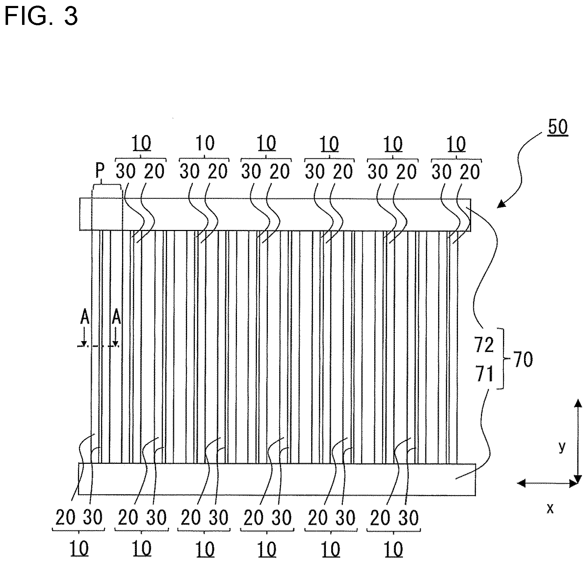

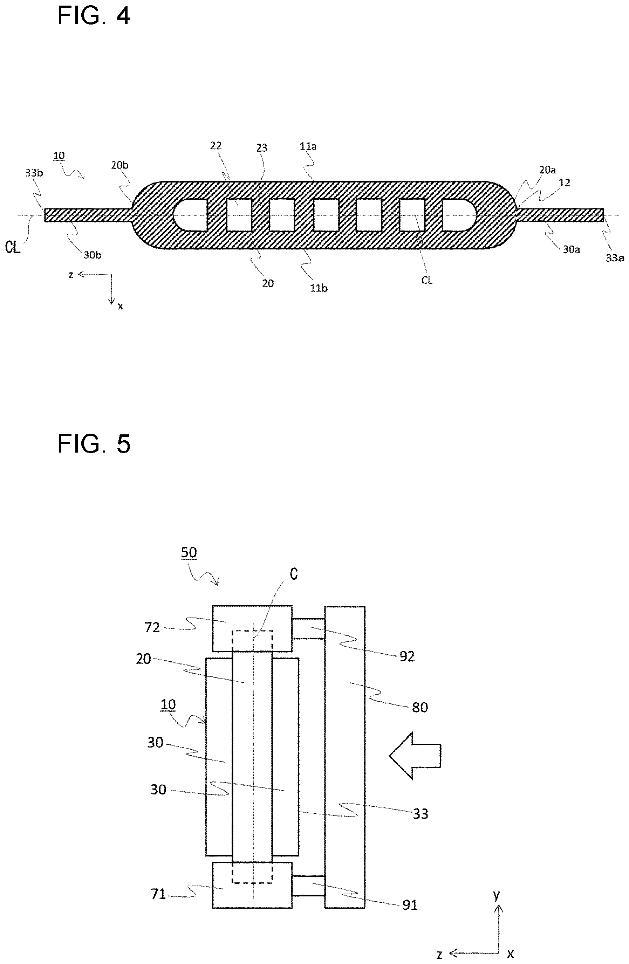

Fig. 2 is a schematic perspective view that illustrates a configuration of the heat exchanger 50 according to Embodiment 1. Fig. 3 is a conceptual side view of the heat exchanger 50 according to Embodiment 1. With reference to Figs. 2 and 3, the heat exchanger 50 according to Embodiment 1 will be described below. X axis in the drawings represents a first direction, in which a plurality of heat transfer parts 10 are arranged. Y axis represents a second direction, in which, in Embodiment 1, a center axis C (see Fig. 5) of each of the plurality of heat transfer parts 10 extends. Z axis represents a third direction that is orthogonal to the first direction and the second direction.

As illustrated in Fig. 3, the heat exchanger 50 includes a plurality of headers 70 and the plurality of heat transfer parts 10. The heat transfer parts 10 are provided between and connected to the plurality of headers 70.

### (Headers 70)

The headers 70 are connected to the plurality of heat transfer parts 10 at the ends of the heat transfer parts 10 in a direction in which the heat transfer parts 10 are elongated. The headers 70 are elongated in a first direction in which the plurality of heat transfer parts 10 are arranged. The headers 70 of the heat exchanger 50 serve as a fluid-distributing mechanism that distributes the refrigerant flowing into the heat exchanger 50 to the plurality of heat transfer parts 10. The headers 70 of the heat exchanger 50 also serve as a fluid-merging mechanism in which distributed portions of the refrigerant that flow out from the plurality of heat transfer parts 10 are merged together to flow out from the heat exchanger 50.

The headers 70 are a first header 71 and a second header 72. One of the first header 71 and the second header 72 serves as the fluid-distributing mechanism, and the other serves as the fluid-merging mechanism. The first header 71 is connected to each of the plurality of heat transfer parts 10 at one end of the heat transfer part 10 in an elongated direction of the heat transfer part 10. The second header 72 is connected to each of the plurality of heat transfer parts 10 at the other end of the heat transfer part 10 in the elongated direction of the heat transfer part 10. That is, the first header 71 and the second header 72 are attached to the plurality of heat transfer parts 10 at two respective ends in the y-axis direction, in which the heat transfer parts 10 are elongated. In other words, the headers 70 are connected to the plurality of heat transfer parts 10 at the ends of the plurality of heat transfer parts 10 in the direction (y-axis direction) in which the center axes of the plurality of heat transfer parts 10 extend, the center axes intersecting the first direction (the x-axis direction). More specifically, the first header 71 and the second header 72 are attached to each of refrigerant passage portions 20, which are included in the plurality of heat transfer parts 10, at two respective ends in a direction in which the refrigerant passage portions 20 extend. The first header 71 and the second header 72 are connected to the refrigerant passage portions 20 of the heat transfer parts 10 such that the inside of each of the headers 70 communicate with the insides of the refrigerant passage portions 20.

The headers 70 illustrated in Figs. 2 and 3 each have a cubic shape elongated in a direction of arrangement of the plurality of heat transfer parts 10. The shape of the header 70 is not limited to a cubic shape and may be another shape such as a circular cylindrical shape.

The first header 71 has inlets (not illustrated) through which the refrigerant flows into the first header 71, or outlets (not illustrated) through which the refrigerant flows out from the first header 71. Likewise, the second header 72 has inlets (not illustrated) through which the refrigerant flows into the second header 72, or outlets (not illustrated) through which the refrigerant flows out from the second header 72.

### (Heat Transfer Parts 10)

Fig. 4 is a sectional view of one of the heat transfer parts 10 illustrated in Fig. 3. Each of the heat transfer parts 10 causes air flowing along the heat transfer part 10 and the refrigerant flowing inside the heat transfer part 10 to exchange heat with each other. The plurality of heat transfer parts 10 are arranged spaced apart from one another and in parallel to one another in the first direction (x-axis direction). The plurality of heat transfer parts 10 are arranged at predetermined intervals in a long-side direction (x-axis direction) of the headers 70. The heat transfer parts 10 each include the refrigerant passage portion 20, which is elongated in the second direction (y-axis direction). The heat transfer parts 10 each include fin portions 30. The fin portions 30 each extend in the third direction (z-axis direction) from the corresponding one of a first lateral end portion 20a and a second lateral end portion 20b of the refrigerant passage portion 20. The first lateral end portion 20a and the second lateral end portion 20b are at the respective ends of the refrigerant passage portion 20 in the third direction (z-axis direction), which intersects a plane parallel to the first direction (x-axis direction) and the second direction (y-axis direction).

### (Refrigerant Passage Portions 20)

Each of the plurality of refrigerant passage portions 20 allows the refrigerant to flow through its inside. The plurality of refrigerant passage portions 20 each extend between the first header 71 and the second header 72. The plurality of refrigerant passage portions 20 are arranged at intervals from one another and in parallel to one another in an axial direction, or an elongated direction, of the headers 70. The plurality of refrigerant passage portions 20 are oriented face to face with one another. Each adjacent two of the plurality of refrigerant passage portions 20 face each other with a gap interposed between the two. The gap serves as a passage for air.

The heat exchanger 50 is oriented such that the first direction in which the plurality of refrigerant passage portions 20 are arranged coincides with the horizontal direction. Note that the first direction in which the plurality of refrigerant passage portions 20 are arranged is not limited to the horizontal direction and may be the vertical direction or a direction inclined toward the vertical direction. Furthermore, the heat exchanger 50 is oriented such that an elongated direction of the plurality of refrigerant passage portions 20 coincides with the vertical direction. Note that the elongated direction of the plurality of refrigerant passage portions 20 is not limited to the vertical direction and may be the horizontal direction or a direction inclined toward the vertical direction.

Adjacent ones of the plurality of refrigerant passage portions 20 are not connected to each other by any heat transfer promoter. The heat transfer promoter is, for example, a plate fin portion or a corrugated fin portion.

When the heat exchanger 50 serves as an evaporator of the refrigeration cycle apparatus 100, the refrigerant flows through the inside of each of the plurality of refrigerant passage portions 20 from one end to the other end in the elongated direction of the refrigerant passage portions 20, that is, in the y-axis direction. When the heat exchanger 50 serves as a condenser of the refrigeration cycle apparatus 100, the refrigerant flows through the inside of each of the plurality of refrigerant passage portions 20 from the other end to the one end in the elongated direction of the refrigerant passage portions 20.

As illustrated in Fig. 4, the refrigerant passage portions 20 are each a flat tube having an elliptical sectional shape. Specifically, the outline of the refrigerant passage portion 20 in a section perpendicular to a center axis of the refrigerant passage portion 20 is flat. The shape of the refrigerant passage portion 20 is not limited. For example, the refrigerant passage portion 20 may be a flat tube having a rectangular sectional shape or another sectional shape that is flat in one direction. The refrigerant passage portion 20 has a pair of the first lateral end portion 20a and the second lateral end portion 20b, and a pair of a flat surface 11a and a flat surface 11b. In the section illustrated in Fig. 4, the first lateral end portion 20a and the second lateral end portion 20b each extend between an end of the flat surface 11a and the corresponding end of the flat surface 11b and are each curved outward. The shape of the first lateral end portion 20a and the shape of the second lateral end portion 20b are not limited to such a shape. For example, the first lateral end portion 20a extends flat between one end of the flat surface 11a and the corresponding end of the flat surface 11b. In the above section, the second lateral end portion 20b extends flat between the other end of the flat surface 11a and the corresponding end of the flat surface 11b.

The first lateral end portion 20a is located upstream in a direction in which air flows through the heat exchanger 50, that is, at the leading end. The second lateral end portion 20b is located downstream in the direction in which air flows through the heat exchanger 50, that is, at the trailing end. Hereinafter, a direction that is perpendicular to the elongated direction of the refrigerant passage portion 20 and parallel to the flat surface 11a and the flat surface 11b may be referred to as a major-axis direction of the refrigerant passage portion 20. In Fig. 4, the major-axis direction of the refrigerant passage portion 20 coincides with a side-to-side direction, and a minor-axis direction coincides with a top-to-bottom direction. The major-axis direction of the refrigerant passage portion 20 is the third direction.

The refrigerant passage portion 20 has a plurality of refrigerant passages 22, which are arranged in the major-axis direction between the first lateral end portion 20a and the second lateral end portion 20b. The refrigerant passage portion 20 is a flat perforated tube in which the plurality of refrigerant passages 22 through the inside of which the refrigerant flows are arranged in the direction of airflow. The plurality of refrigerant passages 22 each extend parallel to the second direction, which is the elongated direction of the refrigerant passage portion 20. A partition 23 is provided between adjacent ones of the refrigerant passages 22 and the partitions 23 each extend continuously from end to end in the elongated direction of the refrigerant passage portion 20. The sectional shape of each refrigerant passage 22 and the number of refrigerant passages 22 are not limited to those illustrated for Embodiment 1. For example, the sectional shape of the refrigerant passage 22 may be any of various other shapes such as a circular shape and a triangular shape. The number of refrigerant passages 22 may be one or a plural number.

### (Fin Portions 30)

In a section perpendicular to the second direction, the fin portions 30 extend from the respective ends of the refrigerant passage portion 20 in the major-axis direction. The fin portions 30 are respective plates extending from the first lateral end portion 20a and the second lateral end portion 20b in the major-axis direction of each of the plurality of refrigerant passage portions 20. The fin portions 30 are not limited to those extending in the major-axis direction of the refrigerant passage portion 20. For example, the fin portions 30 may extend at a predetermined angle toward the major-axis direction such that the fin portions 30 are inclined toward a direction of arrangement of the plurality of refrigerant passage portions 20. The fin portions 30 may be bonded to the refrigerant passage portion 20 or may be integrated with the refrigerant passage portion 20. As described above, adjacent ones of the plurality of refrigerant passage portions 20 are not connected to each other by any heat transfer promoter. That is, each one of the plurality of refrigerant passage portions 20 is not connected by the fin portions 30 to another refrigerant passage portion 20 adjacent to the one of the plurality of refrigerant passage portions 20.

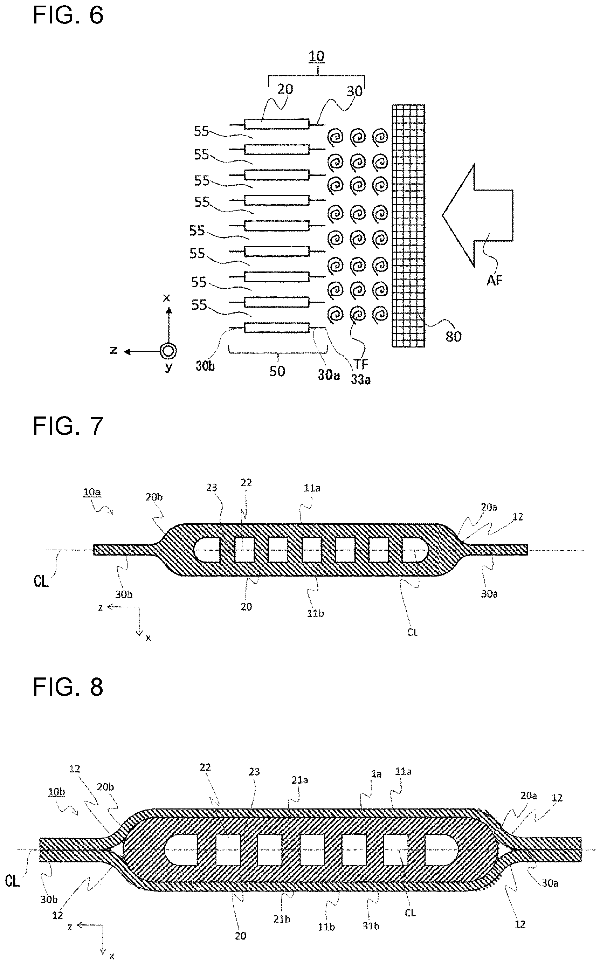

Fig. 5 is a side view of the heat exchanger 50 and a vortex generator 80 included in the refrigeration cycle apparatus 100 according to Embodiment 1, illustrating the positional relationship between the two. Fig. 6 is a schematic diagram illustrating a section perpendicular to the y-axis direction illustrated in Fig. 5. Fig. 6 schematically illustrates vortex flows (turbulent flows) occurring downstream of the vortex generator 80. The following description relates to a case where the heat exchanger 50 and the vortex generator 80 are included in the outdoor unit 106 of the refrigeration cycle apparatus 100 illustrated in Fig. 1. Note that the heat exchanger 50 and the vortex generator 80 are not limited to those included in the outdoor unit 106 and may be included in the indoor unit 107.

The vortex generator 80 allows the air supplied from the fan 108 to pass through the vortex generator 80. The air forms laminar flows before the air passes through the vortex generator 80 and changes its form into vortex flows (turbulent flows) after the air passes through the vortex generator 80. That is, as illustrated in Fig. 6, the air having passed through the vortex generator 80 takes the form of vortex flows (turbulent flows). The vortex generator 80 is made of resin or metal.

The flow of the air at the heat exchanger 50 will be described below. When the fan 108 rotates, air is supplied to the heat exchanger 50. The air passes through the vortex generator 80 before the air flows into the heat exchanger 50. The vortex generator 80 disturbs the laminar flows of the air and thus changes the laminar flows into vortex flows (turbulent flows). The vortex flows (turbulent flows) of the air produce great effects of heat transport and diffusion and therefore improve the heat transfer performance of the heat exchanger 50 more than the laminar flows of the air. That is, the heat exchange in the heat exchanger 50 is promoted by the effect of the vortices.

With the vortex generator 80 provided upstream of the heat exchanger 50, vortex flows (turbulent flows) of air are generated at a region windward of the heat exchanger 50. Therefore, the heat exchange between the air and the plurality of heat transfer parts 10 of the heat exchanger 50 is promoted. Consequently, heat-exchanging performance is improved. The heat exchanger 50 and the vortex generator 80 may be integrated into a unit to be provided inside, for example, the outdoor unit 106 of the refrigeration cycle apparatus 100 or may be installed individually as separate units.

The heat exchanger 50 and the vortex generator 80 are desired to be located as close to each other as possible, with the fin portions 30 of the plurality of heat transfer parts 10 being kept out of contact with the vortex generator 80. As illustrated in Fig. 5, the header 71 of the heat exchanger 50 is in contact with a contact part 91, which is in contact with the vortex generator 80. Furthermore, the header 72 is in contact with a contact part 92, which is in contact with the vortex generator 80. Thus, the tips of the fin portions 30 and the vortex generator 80 are relatively positioned. The contact part 91 and the contact part 92 may be integrated with the header 71 and the header 72, respectively. Alternatively, the contact parts 91 and 92 may be integrated with the vortex generator 80.

As illustrated in Fig. 6, the plurality of heat transfer parts 10 are each provided with the refrigerant passage portion 20 through which the refrigerant flows through its inside, and a fin portion 30a, which extends from the refrigerant passage portion 20 toward the vortex generator 80. In Embodiment 1, as illustrated in Fig. 4, the plurality of heat transfer parts 10 each further include a fin portion 30b, which extends from the refrigerant passage portion 20 in a direction away from the vortex generator 80. A virtual line CL passes through the center of the width of the refrigerant passage portion 20 in the first direction (x axis) and extends in the third direction that is orthogonal to the first direction (x axis) and the second direction (y axis). The virtual line CL passes through the fin portion 30a in an area defined by the thickness of the fin portion 30a in the first direction. That is, the fin portion 30a overlaps with the virtual line CL. The thickness of the fin portion 30a in the first direction refers to the width of the fin portion 30a in the x-axis direction represented in Figs. 7 to 9. In particular, in Fig. 4, the virtual line CL coincides with the center of the thickness of the fin portion 30a.

In such a configuration, an air passage 55 is provided between adjacent ones of the plurality of heat transfer parts 10 illustrated in Fig. 6, and the plurality of air passages 55 each have a uniform shape. Furthermore, each adjacent two of the plurality of air passages 55 have symmetrical shapes about the virtual line CL. Thus, the flows of the air passing through the air passages 55 are stabilized. Consequently, the vortex flows (turbulent flows) generated by the vortex generator 80 become less likely to be attenuated at the air passages 55. The fin portions 30a is thinner than the refrigerant passage portion 20 in the first direction, with tips 33a of the fin portions 30a oriented toward the vortex generator 80. Therefore, the area of collision of the air flowing from the vortex generator 80 into the heat exchanger 50 with the heat exchanger 50 is small. Such a configuration reduces the attenuation of the vortex flows (turbulent flows).

### (Modifications of a Plurality of Heat Transfer Parts 10)

Fig. 7 is a sectional view of a heat transfer part 10a that is a modification of the heat transfer part 10 according to Embodiment 1. In the heat transfer part 10a according to the present modification, the connecting portions 12 at which the refrigerant passage portion 20 is connected to the respective fin portions 30 each have a smoothly curved surface. Such a shape reduces the attenuation of the vortices that is caused by the difference in thickness when the air flow passes along the first lateral end portion 20a of the refrigerant passage portion 20. The first lateral end portion 20a is also referred to as the leading end.

Fig. 8 is a sectional view of a heat transfer part 10b that is a modification of the heat transfer part 10 according to Embodiment 1. In the heat transfer part 10a, the refrigerant passage portion 20 and the fin portions 30 are integrated with each other. In the heat transfer part 10b according to the present modification, the refrigerant passage portion 20 is held between plates 31a and 31b, which are provided over respective flat surfaces 21a and 21b and form the fin portions 30. The fin portions 30a and 30b formed such that opposite end portions of the plate 31a are brought into contact with and bonded to opposite end portions of the plate 32a, which face the opposite end portions of the plate 31a. The heat transfer part 10b configured as above also produces the advantageous effects produced by the heat transfer part 10a. Since the heat transfer part 10b is obtained by bonding the plates 31a and 31b to the refrigerant passage portion 20 in the form of a flat tube, the shape of the fin portions 30 is allowed to be designed more freely than in the case of the heat transfer part 10, which is obtained by a method such as extrusion molding. The heat transfer part 10b illustrated in Fig. 8 is obtained such that the refrigerant passage portion 20 is held between the two plates 31a and 31b. Alternatively, for example, only the plate 31a may be bonded to the refrigerant passage portion 20. In such a case, the fin portions 30a and 30b are made of the plate 31a alone, and the virtual line CL preferably overlaps with the fin portion 30a that is made of the plate 31a.

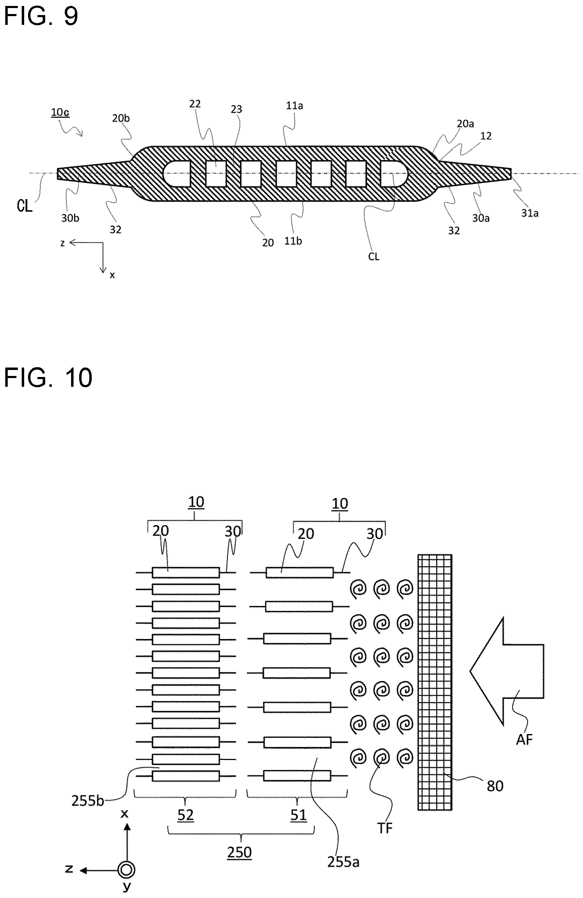

Fig. 9 is a sectional view of a heat transfer part 10c that is a modification of the heat transfer part 10 according to Embodiment 1. The fin portion 30a of the heat transfer part 10c has tapered surfaces 32. With the tapered surfaces 32, the width of the fin portion 30a in the first direction increases from the tip 33a of the fin portion 30a toward the refrigerant passage portion 20. That is, the thickness of the fin portion 30a gradually increases toward the refrigerant passage portion 20. Such a shape of the heat transfer part 10c reduces the attenuation of the vortices that is caused by the difference in thickness when the air flow passes along the first lateral end portion 20a of the refrigerant passage portion 20.

### Embodiment 2

A refrigeration cycle apparatus 200 according to the invention and Embodiment 2 will be described below. The refrigeration cycle apparatus 200 is obtained by changing the configuration of the heat exchanger 50 according to Embodiment 1. Elements having the same functions and effects as those described in Embodiment 1 are denoted by the corresponding ones of the reference signs used in Embodiment 1, and description of such elements is omitted.

Fig. 10 is a schematic diagram of a heat exchanger 250 and the vortex generator 80 included in a refrigeration cycle apparatus 200 according to Embodiment 2, illustrating the positional relationship between the two. The refrigeration cycle apparatus 200 has the same circuit configuration as the refrigeration cycle apparatus 100 according to Embodiment 1. The heat exchanger 250 of the refrigeration cycle apparatus 200 includes two heat-exchanger sections 51 and 52. The heat-exchanger section 51 located adjacent to the vortex generator 80 is referred to as the first heat-exchanger section 51. The heat-exchanger section 52 located downstream in the direction of the airflow passing through the first heat-exchanger section 51 is referred to as the second heat-exchanger section 52.

As with the heat exchanger 50 according to Embodiment 1, the first heat-exchanger section 51 and the second heat-exchanger section 52 each include a plurality of headers 70 and a plurality of heat transfer parts 10. The heat transfer parts 10 are provided between and connected to the plurality of headers 70. The first heat-exchanger section 51 and the second heat-exchanger section 52 are arranged in series in a direction of the airflow traveling from the vortex generator 80 and each cause the refrigerant flowing through its inside and the airflows to exchange heat with each other.

In the first heat-exchanger section 51 located upstream in the direction of the airflow, the interval between each adjacent two of the plurality of heat transfer parts 10 is greater than the interval between the plurality of heat transfer parts 10 of the second heat-exchanger section 52. Such a configuration reduces the attenuation of the vortices in the airflow traveling into the first heat-exchanger section 51 located upstream. Although the attenuation of the vortices at the first heat-exchanger section 51 is reduced, the vortices in the airflow are attenuated before the air reaches the second heat-exchanger section 52. Even though the vortices are attenuated at the first heat-exchanger section 51, a large heat transfer area is secured in the second heat-exchanger section 52 because the plurality of heat transfer parts 10 of the second heat-exchanger section 52 are arranged at smaller intervals. Therefore, satisfactory heat-exchanging performance is provided in the second heat-exchanger section 52 as well. Furthermore, the second heat-exchanger section 52 located downstream is less likely to be frosted than the first heat-exchanger section 51 located upstream. Therefore, in the heat exchanger 250, the resistance to the airflow that is caused by frosting is reduced, and a satisfactory area of heat transfer is secured.

When the heat exchanger 250 according to Embodiment 2 is seen in the third direction from the vortex generator 80, the plurality of heat transfer parts 10 of the second heat-exchanger section 52 include some of the plurality of heat transfer parts 10 each located between adjacent two of the plurality of heat transfer parts 10 of the first heat-exchanger section 51 in the first direction. As illustrated in Fig. 10, some of the plurality of heat transfer parts 10 of the second heat-exchanger section 52 are each located downstream of the corresponding one of the plurality of heat transfer parts 10 of the first heat-exchanger section 51. Furthermore, the plurality of heat transfer parts 10 of the second heat-exchanger section 52 include the heat transfer parts 10 each located downstream of the corresponding one of a plurality of air passages 255a, which are each provided between adjacent ones of the plurality of heat transfer parts 10 of the first heat-exchanger section 51. In such a configuration, the airflow that has passed through the air passages 255a of the first heat-exchanger section 51 and reached the second heat-exchanger section 52 collides with the tips 33a of the fin portions 30 included in the corresponding one of the plurality of heat transfer parts 10 of the second heat-exchanger section 52. At the time of collision, the airflow tends to be disturbed, which promotes the heat exchange in the second heat-exchanger section 52.

Note that the second heat-exchanger section 52 does not necessarily need to include heat transfer parts 10 located downstream of the air passages 255a of the first heat-exchanger section 51. Moreover, the second heat-exchanger section 52 does not necessarily need to include heat transfer parts 10 located downstream of the heat transfer parts 10 of the first heat-exchanger section 51.

### Embodiment 3

A refrigeration cycle apparatus 300 according to Embodiment 3 will be described below. The refrigeration cycle apparatus 300 is obtained by changing the configuration of the heat exchanger 50 according to Embodiment 1. Elements having the same functions and effects as those described in Embodiment 1 are denoted by the corresponding ones of the reference signs used in Embodiment 1, and description of such elements is omitted.

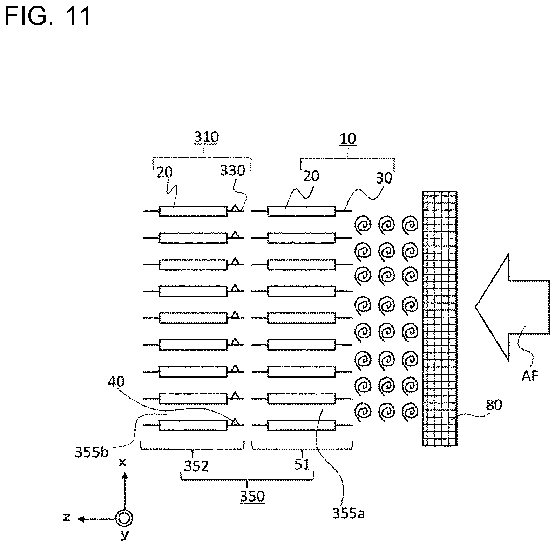

Fig. 11 is a schematic diagram of a heat exchanger 350 and the vortex generator 80 included in a refrigeration cycle apparatus 300 according to Embodiment 3, illustrating the positional relationship between the two. The refrigeration cycle apparatus 300 has the same circuit configuration as the refrigeration cycle apparatus 100 according to Embodiment 1. The heat exchanger 350 of the refrigeration cycle apparatus 300 includes two heat-exchanger sections 51 and 352. The heat-exchanger section 51 located adjacent to the vortex generator 80 is referred to as the first heat-exchanger section 51. The heat-exchanger section 352 located downstream in the direction of the airflow passing through the first heat-exchanger section 51 is referred to as the second heat-exchanger section 352.

The second heat-exchanger section 352 includes a plurality of heat transfer parts 310, which are arranged in the same manner as those of the first heat-exchanger section 51. However, upstream ones of the fin portions 330 of the plurality of heat transfer parts 310 included in the second heat-exchanger section 352 have vortex-generating parts 40.

The vortex-generating parts 40 project in the first direction from the surfaces of the fin portions 330. That is, each of the fin portions 330 is not a flat plate but has surface irregularities.

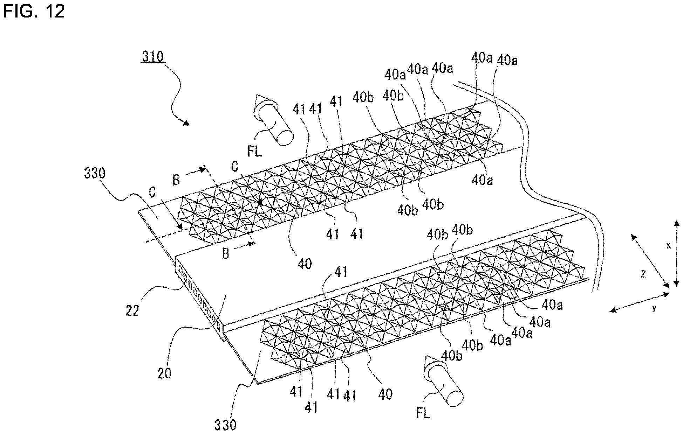

Fig. 12 is an enlargement of one of the heat transfer parts 310 provided in the second heat-exchanger section 352 included in the heat exchanger 350 according to Embodiment 3. Arrows illustrated in Fig. 12 each represent airflow FL. Fig. 12 is a perspective view of a relevant portion of the heat transfer part 310, and irrelevant portions of the heat transfer part 310 are simplified or not illustrated. With reference to Fig. 12, the configuration of the fin portion 330 will be described in further detail. The fin portion 330 has a plurality of vortex-generating parts 40 projecting in the first direction (x-axis direction) from the surface of the fin portion 330. The vortex-generating parts 40 each have a quadrangular-pyramid shape. The shape of the vortex-generating parts 40 is not limited to a quadrangular-pyramid shape. For example, the vortex-generating parts 40 may each have a semispherical shape. When a single vortex-generating part 40 is focused, one surface of the vortex-generating part 40 projects in the first direction (x-axis direction) and the other surface is depressed. The vortex-generating parts 40 are arranged side by side in the second direction (y-axis direction) and arranged side by side in the third direction (z-axis direction). The plurality of vortex-generating parts 40 are formed such that ridge lines 41 of the vortex-generating parts 40 extend continuously with one another in the second direction (y-axis direction) and in the third direction (z-axis direction).

The plurality of vortex-generating parts 40 include first vortex-generating parts 40a, which project from one surface in the first direction (x-axis direction), and second vortex-generating parts 40b, which project from the other surface in the first direction (x-axis direction). The first vortex-generating parts 40a are arranged side by side in the direction of a center axis (the y-axis direction) and arranged side by side in the third direction (z-axis direction). Likewise, the second vortex-generating parts 40b are arranged side by side in the second direction (y-axis direction) and arranged side by side in the third direction (z-axis direction). The plurality of first vortex-generating parts 40a are formed such that the ridge lines 41 of the first vortex-generating parts 40a extend continuously with one another in the third direction (z-axis direction). The plurality of second vortex-generating parts 40b are formed such that the ridge lines 41 of the second vortex-generating parts 40b extend continuously with one another in the third direction (z-axis direction). The plurality of first vortex-generating parts 40a and the plurality of second vortex-generating parts 40b are located alternately in a direction inclined toward the second direction (y-axis direction) and toward the third direction (z-axis direction).

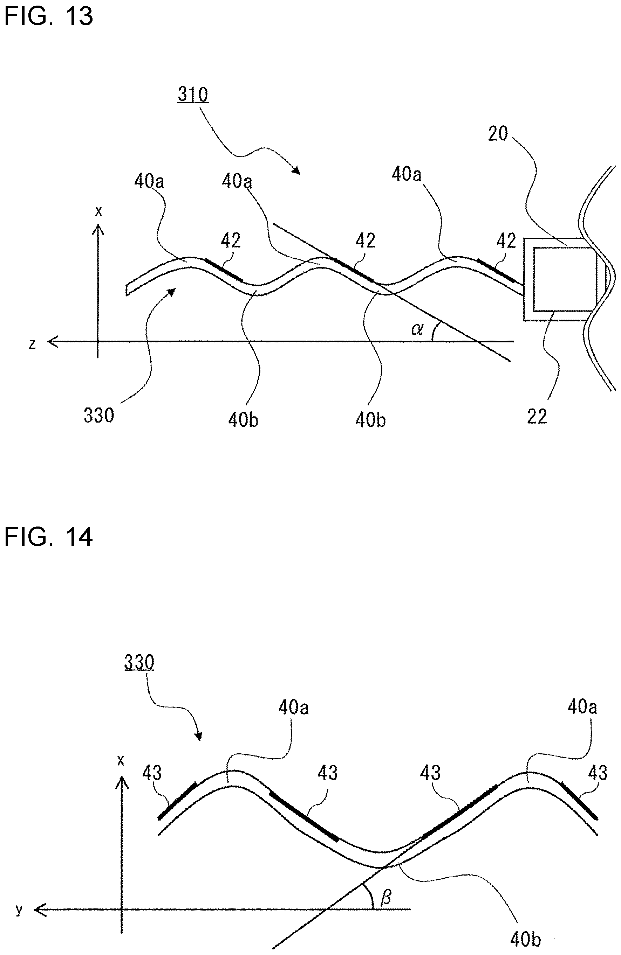

Fig. 13 is a schematic sectional view of one of the fin portions 330 illustrated in Fig. 12, taken along line B-B. The sectional view taken along line B-B illustrates a section of the fin portion 330 taken in the third direction (z-axis direction) and seen in the second direction (y-axis direction). Fig. 13 is a sectional view of a relevant portion of the heat transfer part 310, and irrelevant portions of the heat transfer part 310 are not illustrated. As illustrated in Fig. 13, the plurality of first vortex-generating parts 40a of the fin portion 330 each have a slope 42, which is at a slope angle α between the slope 42 and the third direction (z-axis direction). The slope 42 is on a surface from which the vortex-generating part 40 projects. The slope 42 faces upstream in the direction of the airflow.

Fig. 14 is a schematic sectional view of one of the fin portions 330 illustrated in Fig. 12, taken along line C-C. The sectional view taken along line C-C illustrates a section of the fin portion 330 taken in the second direction (y-axis direction) and seen in the third direction (z-axis direction). Fig. 14 is a sectional view of a relevant portion of the heat transfer part 310, and irrelevant portions of the heat transfer part 310 are not illustrated. As illustrated in Fig. 14, the plurality of first vortex-generating parts 40a of the fin portion 330 each have a slope 43, which is at a slope angle β between the slope 43 and the second direction (y-axis direction).

### [Exemplary Operation of Heat Exchanger 350]

An operation of the heat exchanger 350 according to Embodiment 3 will be described below, by taking an exemplary case where the heat exchanger 350 serves as an evaporator of the refrigeration cycle apparatus 300. The heat exchanger 350 serving as an evaporator receives two-phase gas-liquid refrigerant obtained through the decompression by the decompressor 104. The two-phase gas-liquid refrigerant flows into the first header 71 of the heat exchanger 350 and is divided to be distributed to paths that are in the same number as the plurality of refrigerant passage portions 20. The divided portions of the refrigerant flow through the refrigerant passages 22 provided in the plurality of refrigerant passage portions 20, thereby receiving heat to be evaporated. Then, the evaporated refrigerant flows out from the second header 72 and circulates through the refrigerant circuit 110.

### [Advantageous Effects of Heat Exchanger 350]

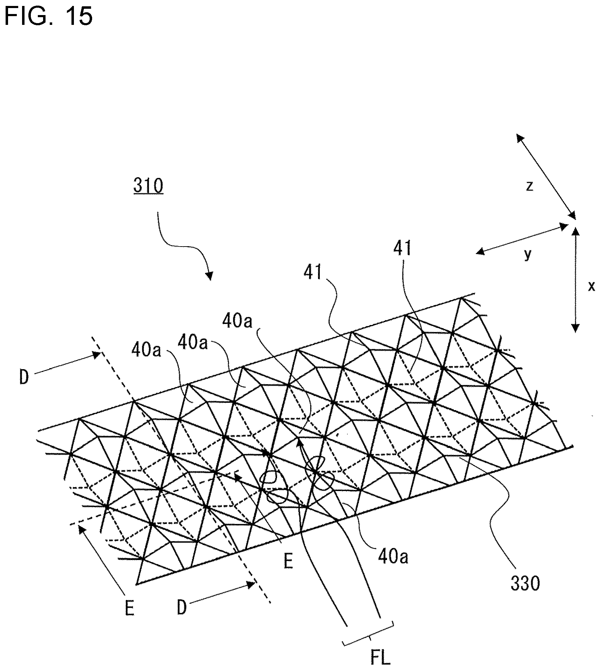

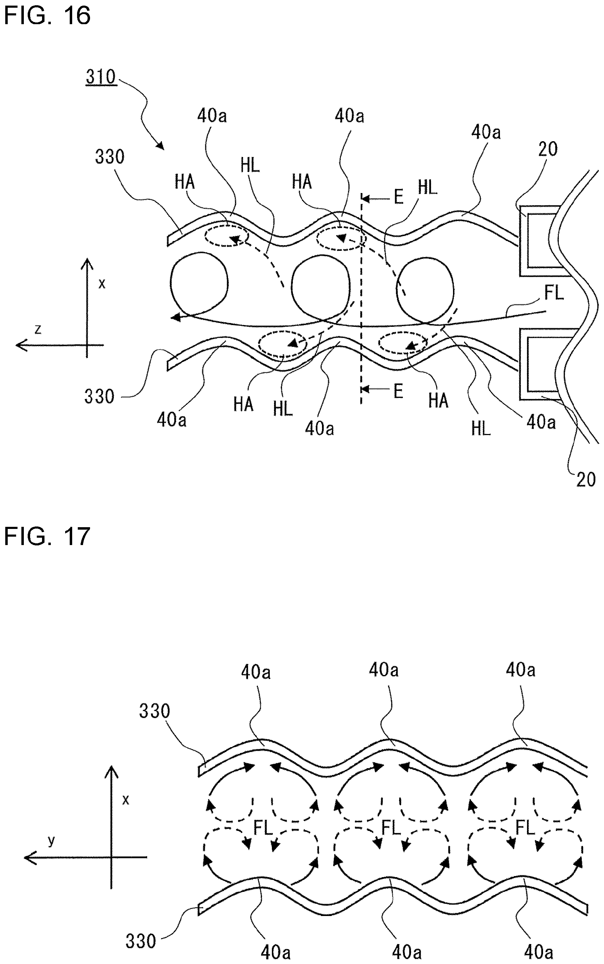

Fig. 15 is an enlargement of one of the fin portions 330 included in the heat transfer part 310 illustrated in Fig. 12. Fig. 16 is a schematic sectional view that illustrates a configuration of the fin portions 330 illustrated in Fig. 15, taken along line D-D. Fig. 17 is a schematic sectional view that illustrates the configuration of the fin portions 330 illustrated in Figs. 15 and 16, taken along line E-E. Arrows illustrated in Figs. 15 to 17 each represent airflow FL. Figs. 16 and 17 are each a sectional view of a relevant portion of the heat transfer part 310, and irrelevant portions of the heat transfer part 310 are not illustrated. In the heat exchanger 350, the airflow FL passes through spaces between the plurality of heat transfer parts 310. In the heat exchanger 350, as illustrated in Fig. 15, the airflow FL collides with the first vortex-generating parts 40a provided in the fin portion 330. Therefore, the airflow FL does not travel linearly but travels such that the airflow FL forms vortices. More specifically, the airflow FL collides with the slopes 42, illustrated in Fig. 13, of the first vortex-generating parts 40a, thereby forming vortices swirling in the third direction (z-axis direction) as illustrated in Fig. 16. The airflow FL forming such vortices generates high-speed flows HL, which travel at a high speed into hollows HA, which are defined between the first vortex-generating parts 40a. Furthermore, the airflow FL collides with the slopes 43, illustrated in Fig. 14, of the first vortex-generating parts 40a, thereby generating vortices swirling in the second direction (y-axis direction) as illustrated in Fig. 17. Thus, the first vortex-generating parts 40a of the fin portion 330 cause the airflow FL to form vortices that swirl in the second direction and swirl in the third direction, thereby stirring the airflow.

As described above, the plurality of vortex-generating parts 40 each have a surface that is at a slope angle between the slope and the second direction (y-axis direction) and a surface that is at a slope angle between the slope and the third direction (z-axis direction). In the heat exchanger 350, since the airflow collides with the surfaces that are inclined each toward the second direction (y-axis direction) and the third direction (z-axis direction), the airflow is stirred. Therefore, in the heat exchanger 350, the air flows into the surfaces of the downstream fin portions 30 of the refrigerant passage portions 20 and the flow speed of the air in the vicinity of the surfaces of the fin portions 30 thus increases. Consequently, the coefficient of heat transfer increases.

The plurality of first vortex-generating parts 40a each have a quadrangular-pyramid shape, and the ridge lines 41 of the first vortex-generating parts 40a extend continuously with one another in the third direction (z-axis direction). Therefore, in the heat exchanger 350, the airflow FL forming vortices as a whole is more likely to travel in the third direction (z-axis direction) along the ridges of the ridge lines 41.

The fin portion 330 has a surface with the plurality of vortex-generating parts 40. Therefore, the fin portion 330 has a larger surface area than in a case where no vortex-generating parts 40 are provided to the fin portion. Accordingly, the second heat-exchanger section 352 has improved heat transfer performance. In the second heat-exchanger section 352 of the heat exchanger 350 illustrated in Fig. 11, although the vortices formed from the airflow having passed through air passages 355a in the first heat-exchanger section 51 are attenuated, the turbulence of the airflow is increased by the vortex-generating parts 40 provided to ones of the fin portions 330 of the second heat-exchanger section 352 that are located closer to the vortex generator 80 than are the other ones of the fin portions 330 that are away from the vortex generator 80. Thus, the air flowing into the second heat-exchanger section 352 of the heat exchanger 350 forms vortex flows (turbulent flows), which increase the efficiency of heat exchange between the refrigerant and the air at the second heat-exchanger section 352.

While the vortex-generating parts 40 according to Embodiment 3 each have a quadrangular-pyramid shape, the shape of the vortex-generating parts 40 is not limited to a quadrangular-pyramid shape. For example, the vortex-generating parts 40 may be projections each having a polygonal-pyramid shape such as a pentagonal-pyramid shape, projections each having a semi-cylindrical sectional shape, or any other forms.

While Fig. 12 illustrates a case where, in each of the plurality of heat transfer parts 310, the fin portions 330 located upstream and downstream in the direction of airflow both have the vortex-generating parts 40, the vortex-generating parts 40 only need be provided to at least the fin portion 330 located upstream. While Embodiment 3 relates to a case where the vortex-generating parts 40 are provided to the upstream fin portions 330 of the second heat-exchanger section 352, the vortex-generating parts 40 may be provided to the fin portions 30 of the first heat-exchanger section 51. In such a case, the first heat-exchanger section 51 includes the vortex-generating parts 40 provided to the fin portions 30 that extends toward the second heat-exchanger section 352. In such a configuration of the heat exchanger 350 as well, the formation of vortex flows from the air flowing into the second heat-exchanger section 352 is promoted. Consequently, the efficiency of heat exchange increases. To summarize, the vortex-generating parts 40 only need to be located at least between a set of the refrigerant passage portions 20 of the first heat-exchanger section 51 and a set of the refrigerant passage portions 20 of the second heat-exchanger section 352.

Embodiments 1 to 3 described above may be combined with one another. The configurations described in the above embodiments are only exemplary and may be combined with any other known techniques. Some features of the configurations described above may be omitted or changed without departing from the essence of the above embodiments. The invention is defined by the appended claims.

### Reference Signs List

10: heat transfer part, 10a: heat transfer part, 10b: heat transfer part, 10c: heat transfer part, 11a: flat surface, 11b: flat surface, 12: connecting portion, 20: refrigerant passage portion, 20a: first lateral end portion, 20b: second lateral end portion, 20c: flat surface, 20d: flat surface, 21a: flat surface, 22: refrigerant passage, 23: partition, 30: fin portion, 30a: fin portion, 30b: fin portion, 31a: plate, 32: tapered surface, 33a: tip, 40: vortex-generating part, 40a: first vortex-generating part, 40b: second vortex-generating part, 41: ridge line, 42: slope, 43: slope, 50: heat exchanger, 51: (first) heat-exchanger section, 52: (second) heat-exchanger section, 55: air passage, 70: header, 71: (first) header, 72: (second) header, 80: vortex generator, 91: contact part, 100: refrigeration cycle apparatus, 101: compressor, 102: flow switching device, 103: indoor heat exchanger, 104: decompressor, 105: outdoor heat exchanger, 106: outdoor unit, 107: indoor unit, 108: (outdoor) fan, 109: indoor fan, 110: refrigerant circuit, 111: extension pipe, 112: extension pipe, 200: refrigeration cycle apparatus, 250: heat exchanger, 255a: air passage, 300: refrigeration cycle apparatus, 310: heat transfer part, 330: fin portion, 350: heat exchanger, 352: (second) heat-exchanger section, 355a: air passage, CL: virtual line, FL: airflow, HA: hollow, HL: high-speed flow, α: slope angle, β: slope angle

## Claims

1. A heat-exchanger unit, comprising:
a heat exchanger (50, 250, 350);
a fan (108) configured to supply air to the heat exchanger (50, 250, 350); and
a vortex generator (80) located upstream of the heat exchanger (50, 250, 350) in a direction in which the air flows and configured to generate a vortex flow of the air, the heat exchanger (50, 250, 350) being provided with
a first heat-exchanger section (51) that includes a plurality of heat transfer parts (10, 10a, 10b, 10c) that are arranged at intervals in a first direction; and
a second heat-exchanger section (52, 352) that includes a plurality of heat transfer parts (10, 10a, 10b, 10c, 310) that are arranged at intervals in the first direction,
the first heat-exchanger section (51) being located closer to the vortex generator (80) than is the second heat-exchanger section (52, 352),
**characterized in that**
each of the intervals in the first direction between the plurality of heat transfer parts (10, 10a, 10b, 10c) of the first heat-exchanger section (51) being greater than each of the intervals in the first direction between the plurality of heat transfer parts (10, 10a, 10b, 10c, 310) of the second heat-exchanger section (52, 352),
the plurality of heat transfer parts (10, 10a, 10b, 10c, 310) being each provided with
a refrigerant passage portion (20) through which refrigerant flows inside the refrigerant passage portion (20) in a second direction that intersects the first direction, and
a fin portion (30, 30a, 330) that extends from the refrigerant passage portion (20) toward the vortex generator (80),
where a virtual line (CL) passes through a center of a width of the refrigerant passage portion (20) in the first direction and extends in a third direction that is orthogonal to the first direction and the second direction, the fin portion (30, 30a, 30b, 330) overlapping with the virtual line (CL) in position.

2. The heat-exchanger unit of claim 1, wherein the virtual line (CL) coincides with a center of a thickness of the fin portion (30) when the virtual line (CL) is seen in the third direction.

3. The heat-exchanger unit of claim 1 or 2, wherein the fin portion (30) and the refrigerant passage portion (20) are connected to each other at a connecting portion (12) that has a surface that is curved in a section perpendicular to the second direction.

4. The heat-exchanger unit of any one of claims 1 to 3, wherein a thickness of the fin portion (30) in the first direction gradually increases in a direction from the vortex generator (80) toward the refrigerant passage portion (20).

5. The heat-exchanger unit of any one of claims 1 to 4, wherein an outline of the refrigerant passage portion (20) in a section perpendicular to the second direction is flat.

6. The heat-exchanger unit of any one of claims 1 to 5, wherein the plurality of heat transfer parts (10) of the second heat-exchanger section (52) include the plurality of heat transfer parts (10) that are each located, when the heat-exchanger unit is seen in the third direction, between adjacent two of the plurality of heat transfer parts (10) of the first heat-exchanger section (51) in the first direction.

7. The heat-exchanger unit of any one of claims 1 to 6, wherein the fin portions (30) located between a set of the refrigerant passage portions (20) of the plurality of heat transfer parts (10) of the first heat-exchanger section (51) and a set of the refrigerant passage portions (20) of the plurality of heat transfer parts (10) of the second heat-exchanger section (352) each have a vortex-generating part (40) configured to generate a vortex flow from the air that passes along the fin portions (30).

8. The heat-exchanger unit of any one of claims 1 to 7,
wherein the heat exchanger (50) includes a header (70) to which ends of the plurality of heat transfer parts (10) in a direction in which the plurality of heat transfer parts (10) are elongated are connected,
wherein the header (70) is provided with a contact part (91) that is in contact with the vortex generator (80), and
wherein a tip (33a) of the fin portion (30) is spaced apart from the vortex generator (80).

9. A refrigeration cycle apparatus (100) comprising
the heat-exchanger unit of any one of claims 1 to 8.

## Patentansprüche

1. Wärmetauschereinheit, umfassend:
einen Wärmetauscher (50, 250, 350);
einen Lüfter (108), der eingerichtet ist, dem Wärmetauscher (50, 250, 350) Luft zuzuführen; und
einen Wirbelgenerator (80), der stromaufwärts des Wärmetauschers (50, 250, 350) in einer Richtung angeordnet ist, in der die Luft strömt, und der eingerichtet ist, eine Wirbelströmung der Luft zu erzeugen,
wobei der Wärmetauscher (50, 250, 350) vorgesehen ist mit
einem ersten Wärmetauscherbereich (51), der eine Vielzahl von Wärmetransferteilen (10, 10a, 10b, 10c) aufweist, die in Intervallen in einer ersten Richtung angeordnet sind; und
einem zweiten Wärmetauscherbereich (52, 352), der eine Vielzahl von Wärmetransferteilen (10, 10a, 10b, 10c, 310) aufweist, die in Intervallen in der ersten Richtung angeordnet sind,
wobei der erste Wärmetauscherbereich (51) näher an dem Wirbelgenerator (80) angeordnet ist als der zweite Wärmetauscherbereich (52, 352),
**dadurch gekennzeichnet, dass**
jedes der Intervalle in der ersten Richtung zwischen der Vielzahl von Wärmetransferteilen (10, 10a, 10b, 10c) des ersten Wärmetauscherbereichs (51) größer ist als jedes der Intervalle in der ersten Richtung zwischen der Vielzahl von Wärmetransferteilen (10, 10a, 10b, 10c, 310) des zweiten Wärmetauscherbereichs (52, 352),
wobei die Vielzahl von Wärmetransferteilen (10, 10a, 10b, 10c, 310) jeweils vorgesehen sind mit
einem Kältemitteldurchgangsabschnitt (20), durch den Kältemittel innerhalb des Kältemitteldurchgangsabschnitts (20) in einer zweiten Richtung, die die erste Richtung schneidet, strömt, und
einem Rippenabschnitt (30, 30a, 330), der sich von dem Kältemitteldurchgangsabschnitt (20) zu dem Wirbelgenerator (80) hin erstreckt,
wobei eine virtuelle Linie (CL) durch eine Mitte einer Breite des Kältemitteldurchgangsabschnitts (20) in der ersten Richtung hindurchgeht und sich in einer dritten Richtung erstreckt, die orthogonal zu der ersten Richtung und der zweiten Richtung ist, wobei der Rippenabschnitt (30, 30a, 30b, 330) mit der virtuellen Linie (CL) in der Position überlappt.

2. Wärmetauschereinheit nach Anspruch 1, wobei die virtuelle Linie (CL) mit einem Mittelpunkt einer Dicke des Rippenabschnitts (30) zusammenfällt, wenn die virtuelle Linie (CL) in der dritten Richtung gesehen wird.

3. Wärmetauschereinheit nach Anspruch 1 oder 2, wobei der Rippenabschnitt (30) und der Kältemitteldurchgangsabschnitt (20) an einem Verbindungsabschnitt (12) miteinander verbunden sind, der eine Oberfläche aufweist, die in einem Bereich senkrecht zur zweiten Richtung gekrümmt ist.

4. Wärmetauschereinheit nach einem der Ansprüche 1 bis 3, wobei eine Dicke des Rippenabschnitts (30) in der ersten Richtung allmählich in einer Richtung vom Wirbelgenerator (80) zum Kältemitteldurchgangsabschnitt (20) hin zunimmt.

5. Wärmetauschereinheit nach einem der Ansprüche 1 bis 4, wobei ein Umriss des Kältemitteldurchgangsabschnitts (20) in einem Bereich senkrecht zur zweiten Richtung flach ist.

6. Wärmetauschereinheit nach einem der Ansprüche 1 bis 5, wobei die Vielzahl von Wärmetransferteilen (10) des zweiten Wärmetauscherbereichs (52) die Vielzahl von Wärmetransferteilen (10) umfasst, die jeweils, wenn die Wärmetauschereinheit in der dritten Richtung gesehen wird, zwischen zwei benachbarten der Vielzahl von Wärmetransferteilen (10) des ersten Wärmetauscherbereichs (51) in der ersten Richtung angeordnet sind.

7. Wärmetauschereinheit nach einem der Ansprüche 1 bis 6, wobei die Rippenabschnitte (30), die sich zwischen einem Satz der Kältemitteldurchgangsabschnitte (20) der Vielzahl von Wärmetransferteilen (10) des ersten Wärmetauscherbereichs (51) und einem Satz der Kältemitteldurchgangsabschnitte (20) der Vielzahl von Wärmetransferteilen (10) des zweiten Wärmetauscherbereichs (352) befinden, jeweils einen wirbelerzeugenden Teil (40) aufweisen, der eingerichtet ist, aus der Luft, die entlang der Rippenabschnitte (30) passiert, einen Wirbelstrom zu erzeugen.

8. Wärmetauschereinheit nach einem der Ansprüche 1 bis 7,
wobei der Wärmetauscher (50) ein Kopfstück (70) aufweist, mit dem Enden der Vielzahl von Wärmetransferteilen (10) in einer Richtung verbunden sind, in der die Vielzahl von Wärmetransferteilen (10) langgestreckt sind,
wobei das Kopfstück (70) mit einem Kontaktteil (91) vorgesehen ist, der in Kontakt mit dem Wirbelgenerator (80) steht, und
wobei eine Spitze (33a) des Rippenabschnitts (30) von dem Wirbelgenerator (80) beabstandet ist.

9. Kältekreislaufvorrichtung (100), umfassend
die Wärmetauschereinheit nach einem der Ansprüche 1 bis 8.

## Revendications

1. Unité échangeur de chaleur, comprenant :
un échangeur de chaleur (50, 250, 350) ;
un ventilateur (108) configuré pour fournir de l'air à l'échangeur de chaleur (50, 250, 350) ; et
un dispositif de production d'écoulement tourbillonnaire (80) situé en amont de l'échangeur de chaleur (50, 250, 350) dans une direction dans laquelle l'air s'écoule et configuré pour produire un écoulement tourbillonnaire de l'air,
l'échangeur de chaleur (50, 250, 350) étant pourvu de
une première section d'échangeur de chaleur (51) qui comprend une pluralité de pièces de transfert de chaleur (10, 10a, 10b, 10c) qui sont agencées à intervalles dans une première direction ; et
une seconde section d'échangeur de chaleur (52, 352) qui comprend une pluralité de pièces de transfert de chaleur (10, 10a, 10b, 10c, 310) qui sont agencées à intervalles dans la première direction,
la première section d'échangeur de chaleur (51) étant située plus près du dispositif de production d'écoulement tourbillonnaire (80) que la seconde section d'échangeur de chaleur (52, 352),
**caractérisée en ce que**
chacun des intervalles dans la première direction entre la pluralité de pièces de transfert de chaleur (10, 10a, 10b, 10c) de la première section d'échangeur de chaleur (51) étant supérieur à chacun des intervalles dans la première direction entre la pluralité de pièces de transfert de chaleur (10, 10a, 10b, 10c, 310) de la seconde section d'échangeur de chaleur (52, 352),
la pluralité de pièces de transfert de chaleur (10, 10a, 10b, 10c, 310) étant chacune pourvue de
une partie de passage de fluide frigorigène (20) à travers laquelle le fluide frigorigène s'écoule à l'intérieur de la partie de passage de fluide frigorigène (20) dans une deuxième direction qui croise la première direction, et
une partie ailette (30, 30a, 330) qui s'étend de la partie de passage de fluide frigorigène (20) vers le dispositif de production d'écoulement tourbillonnaire (80),
où une ligne imaginaire (CL) passe par le centre, dans le sens de la largeur, de la partie de passage de fluide frigorigène (20) dans la première direction et s'étend dans une troisième direction qui est orthogonale à la première direction et à la deuxième direction, la partie ailette (30, 30a, 30b, 330) étant agencée dans une position chevauchant la ligne virtuelle (CL).

2. Unité échangeur de chaleur selon la revendication 1, dans laquelle la ligne virtuelle (CL) coïncide avec le centre, dans le sens de l'épaisseur, de la partie ailette (30) lorsque la ligne virtuelle (CL) est vue dans la troisième direction.

3. Unité échangeur de chaleur selon la revendication 1 ou 2, dans laquelle la partie ailette (30) et la partie de passage de fluide frigorigène (20) sont reliées l'une à l'autre au niveau d'une partie de connexion (12) dont une surface est incurvée dans une section perpendiculaire à la deuxième direction.

4. Unité échangeur de chaleur selon l'une quelconque des revendications 1 à 3, dans laquelle une épaisseur de la partie ailette (30) dans la première direction augmente progressivement dans une direction allant du dispositif de production d'écoulement tourbillonnaire (80) vers la partie de passage de fluide frigorigène (20).

5. Unité échangeur de chaleur selon l'une quelconque des revendications 1 à 4, dans laquelle un contour de la partie de passage de fluide frigorigène (20) dans une section perpendiculaire à la deuxième direction est plat.

6. Unité échangeur de chaleur selon l'une quelconque des revendications 1 à 5, dans laquelle la pluralité de pièces de transfert de chaleur (10) de la seconde section d'échangeur de chaleur (52) comprend la pluralité de pièces de transfert de chaleur (10) qui sont chacune situées, lorsque l'unité échangeur de chaleur est vue dans la troisième direction, entre deux pièces de transfert de chaleur adjacentes de la pluralité de pièces de transfert de chaleur (10) de la première section d'échangeur de chaleur (51) dans la première direction.

7. Unité échangeur de chaleur selon l'une quelconque des revendications 1 à 6, dans laquelle les parties ailettes (30) situées entre un ensemble des parties de passage de fluide frigorigène (20) de la pluralité de pièces de transfert de chaleur (10) de la première section d'échangeur de chaleur (51) et un ensemble des parties de passage de fluide frigorigène (20) de la pluralité de pièces de transfert de chaleur (10) de la seconde section d'échangeur de chaleur (352) ont chacune une partie de production d'écoulement tourbillonnaire (40) configurée pour produire un écoulement tourbillonnaire à partir de l'air qui passe le long des parties ailettes (30).

8. Unité échangeur de chaleur selon l'une quelconque des revendications 1 à 7,
dans laquelle l'échangeur de chaleur (50) comprend un collecteur (70) auquel sont reliées des extrémités de la pluralité de pièces de transfert de chaleur (10) dans une direction dans laquelle la pluralité de pièces de transfert de chaleur (10) sont allongées,
dans laquelle le collecteur (70) est pourvu d'une pièce de contact (91) qui est en contact avec le dispositif de production d'écoulement tourbillonnaire (80), et
dans laquelle une pointe (33a) de la partie ailette (30) est éloignée du dispositif de production d'écoulement tourbillonnaire (80).

9. Appareil à cycle réfrigérant (100) comprenant
l'unité échangeur de chaleur selon l'une quelconque des revendications 1 à 8.
